# FASCICULE DE BREVET EUROPEEN

(11) **EP 2 861 977 B1**
(45) Date de publication et mention de la délivrance du brevet: **08.08.2018**
(21) Numéro de dépôt: 13729349.4
(22) Date de dépôt: 17.06.2013
(51) Int. Cl.: G01N 29/07, G01N 29/24, G01N 29/44

(54) **CONTRÔLE NON-DESTRUCTIF PAR ULTRASONS DE STRUCTURES EN MATÉRIAU COMPOSITE**
ZERSTÖRUNGSFREIE ULTRASCHALLPRÜFUNG VON VERBUNDSTRUKTUREN
NON DESTRUCTIVE ULTRASONIC INSPECTION OF STRUCTURES IN COMPOSITE MATERIAL

(30) Priorité: 19.06.2012 FR 1255720
(43) Date de publication de la demande: 22.04.2015
(73) Titulaire: Airbus Operations S.A.S., 31060 Toulouse (FR); European Aeronautic Defence And Space Company Eads France, 75016 Paris (FR)
(72) Inventeur: METAYER, Patrick, F-31410 Mauzac (FR); PAGES, Marion, F-31300 Toulouse (FR)
(74) Mandataire: Gicquel, Olivier Yves Gérard
(86) Numéro de dépôt international: PCT/EP2013/062518
(87) Numéro de publication internationale: WO 2013/189885

(56) Documents cités:
- GB-A- 2 336 676
- JP-A- H04 301 762
- US-A1- 2011 013 486

## Description

La présente invention appartient au domaine du contrôle non-destructif de structures, et concerne plus particulièrement un dispositif et un procédé pour un contrôle non-destructif par ultrasons de structures en matériau composite stratifié, comme par exemple des panneaux servant à réaliser le fuselage ou les éléments de voilure d'un aéronef.

Les panneaux en matériaux composites stratifiés sont réalisés par un empilement d'une pluralité de couches, formées de fibres, maintenues entre elles au moyen d'une résine durcie.

Durant la vie de l'aéronef, un panneau en matériau composite stratifié servant à réaliser le fuselage ou les éléments de voilure, subit des impacts sur sa face libre, dite face avant, par exemple à la suite de collisions avec des oiseaux, ou de chutes d'outils lors des opérations de maintenance. Ces impacts détériorent la structure du panneau car ils génèrent des délaminages entre ses couches. Une simple inspection visuelle n'est pas suffisante pour détecter un délaminage.

On connait un dispositif de contrôle ultrasonore, décrit dans la demande de brevet européen EP1759195, pour révéler si des délaminages sont présents dans l'épaisseur d'un panneau, suite à un impact. Ce dispositif envoie, via une sonde au contact de la face avant du panneau inspecté, une impulsion ultrasonore et recueille l'impulsion réfléchi par la face arrière du panneau, puis compare la forme et le temps de retour du signal réfléchi avec la forme et le temps de retour d'un signal réfléchi, dit signal de référence, par la face arrière du panneau obtenu lorsque le panneau est sain. Une différence de forme et de temps de retour entre les deux signaux réfléchis au-delà de limites acceptables est révélatrice d'un délaminage.

Ce dispositif nécessite préalablement à son utilisation, une calibration sur un panneau sain ayant les mêmes dimensions que le panneau à inspecter afin d'obtenir la forme et le temps de retour du signal de référence. Du fait de cette calibration, ce dispositif est très efficace pour des panneaux à inspecter ayant une épaisseur constante mais peut donner des résultats erronés lorsque la sonde est déplacée sur une longueur d'un panneau selon laquelle le panneau présente une épaisseur décroissante, notamment décroissante par pallier. En outre, le document GB2336676 décrit un procédé de détection de laminage de matériaux composites à l'aide d'ultrasons. Le document JPH04301762 décrit un procédé d'inspection par ultrasons comprenant un mode de couplage durant lequel la condition du contact entre une sonde ultrasonore et la surface inspectée est évaluée. Enfin, le document US2011/0013486 décrit une sonde ultrasonore ayant la forme d'une roue libre enfermant un liquide de couplage et une pluralité de transducteurs.

Or le fuselage et/ou les éléments de voilure de certains aéronefs sont formés par des panneaux en matériaux composites stratifiés ayant une épaisseur non constante. Il n'existe pas actuellement de dispositifs efficaces pour un contrôle non-destructif par ultrasons de tels panneaux. Le but de la présente invention est de remédier en tout ou partie à ce manque.

A cet effet, l'invention a pour objet un appareil de diagnostic et un procédé pour la détection d'un délaminage dans l'épaisseur d'un panneau en composite stratifié selon les revendications 1 et 4, respectivement. L'invention permet une inspection d'un panneau sans effectuer au préalable de calibration de la sonde sur un panneau sain ayant les mêmes dimensions que le panneau à inspecter. Selon l'invention, la vérification du bon couplage entre la sonde et le panneau permet de s'assurer que la plage de profondeur analysée de l'épaisseur du panneau est constante qu'importe l'épaisseur du panneau. Ainsi, l'appareil de diagnostic selon l'invention permet d'inspecter un panneau présentant une épaisseur décroissante ou croissante, notamment décroissante par pallier, sur sa longueur.

L'invention sera maintenant plus précisément décrite dans le cadre de modes de réalisation préférés, qui n'en sont nullement limitatifs, représentés sur les figures 1 à 4, dans lesquelles :
- la figure 1 est une vue schématique d'un appareil de diagnostic selon un mode de réalisation de l'invention, comprenant une sonde, un dispositif électronique et un dispositif de visualisation ;
- la figure 2 est une vue schématique de la sonde de la figure 1 ;
- la figure 3 est une représentation des connections électriques entre les différents éléments composant l'appareil de diagnostic de l'invention ;
- la figure 4 est une vue de la face du dispositif de visualisation de la figure 1 qui comprend notamment une pluralité de témoins lumineux;
- la figure 5 est une vue en coupe transversale de l'épaisseur d'un panneau inspecté par l'appareil de diagnostic selon l'invention, le panneau ayant subi un impact sur sa face avant ayant donné lieu à des délaminages ; et
- la figure 6 est le profil d'écho, produit par le dispositif électronique, du panneau inspecté représenté à la figure 5.

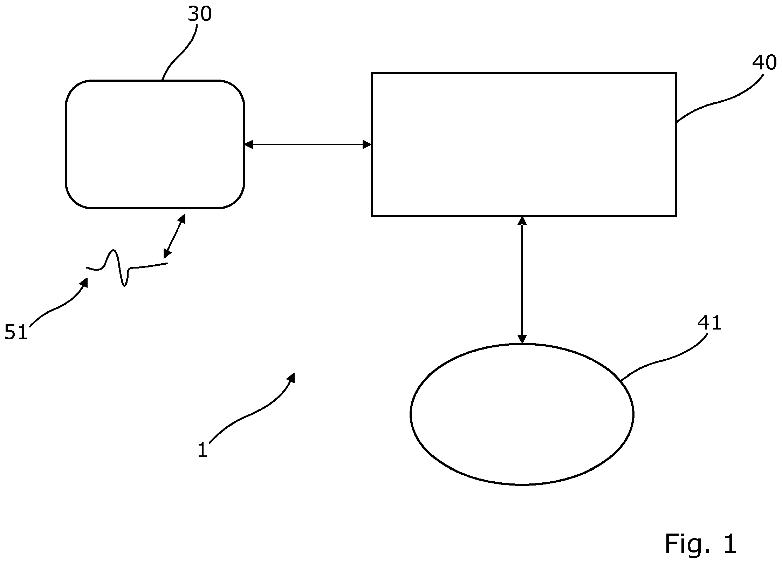

La figure 1 montre un l'appareil de diagnostic 1 selon un mode de réalisation préféré de l'invention. L'appareil de diagnostic 1 est destiné à être utilisé pour inspecter un panneau, par exemple d'un aéronef, réalisé en matériau composite stratifié et pour détecter d'éventuels délaminages dans l'épaisseur de ce panneau.

L'appareil de diagnostic 1 comprend une sonde ultrasonore 30, un dispositif électronique 40 pour commander l'émission et la réception d'impulsions ultrasonores 50 par la sonde ultrasonore 30, ainsi qu'un dispositif de visualisation 41 muni notamment de témoins quant à la présence ou non de délaminage dans le panneau.

La sonde ultrasonore 30 est de type sonde à rouleau comprenant de manière connue un corps pourvu d'une roue montée libre en rotation à une extrémité du corps. La roue est l'élément de la sonde qui est destiné à être mis en contact avec la face avant du panneau à inspecter. Pour réaliser l'inspection d'un panneau, une pluralité de transducteurs élémentaires formant un réseau de transducteurs élémentaires est fixé au moyeu de la roue.

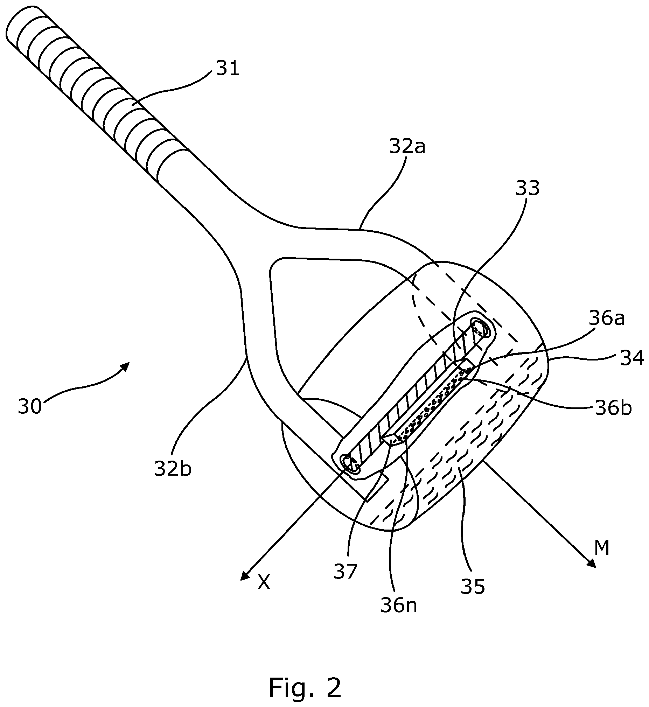

Selon l'exemple illustré à la figure 2, le corps de la sonde 30 a une forme de fourche comprenant un tube 31 cylindrique prolongé par deux branches 32a,32b. L'extrémité libre du tube cylindrique forme un manche pour un opérateur. Une roue libre 34 est fixée dans l'espace formé par les deux branches 32a,32b au moyeu d'un moyeu 33. Le moyeu 33 est fixe par rapport aux deux branches 32a,32b.

La roue 34 présente la forme d'un pneu réalisé avec une membrane sensiblement cylindrique en caoutchouc. La membrane enferme un liquide 35 neutre vis-à-vis des ondes ultrasonores, ainsi que le réseau de transducteurs élémentaires 36a,36b,...,36n qui est arrangé sur un support 37, de type parallélépipédique, fixé au moyeu 33 comme visible sur la figure 2. Le support 37 est fixé sur une première face au moyeu de la roue, et les transducteurs élémentaires 36a,36b,...,36n sont tous disposés sur la face du support 37 qui est opposée à la première face, de sorte que tous les transducteurs élémentaires 36a,36b,...,36n émettent des impulsions ultrasonores vers une même direction, dite direction d'inspection M. Dans l'exemple représenté, la direction d'inspection M est sensiblement alignée avec l'axe longitudinal du tube 31.

Lors de l'utilisation de l'appareil de diagnostic 1 selon l'invention, la sonde 30 est appuyée, en position d'utilisation, au niveau de sa roue 34 sur la face avant d'un panneau à inspecter de sorte que la direction d'inspection M est sensiblement parallèle à la direction transversale du panneau. La sonde 30 est avantageusement apte à être déplacée, via sa roue 34, sur la face avant du panneau. Lors du déplacement de la roue 34, le réseau de transducteurs élémentaires 36a,36b,...,36n baigne dans le liquide 35 de sorte que ce dernier forme une interface neutre aux ondes ultrasonores entre le réseau de transducteurs élémentaires 36a,36b,...,36n et la membrane en caoutchouc de la roue 34.

Chaque transducteur élémentaire 36a,36b,...,36n est un transducteur piézoélectrique activable à la fois en émission et en réception pour respectivement émettre et recevoir des impulsions ultrasonores. Dans la suite de la description, une impulsion ultrasonore émise par un transducteur élémentaire 36a,36b,...,36n suite à son activation en émission sera appelée tir.

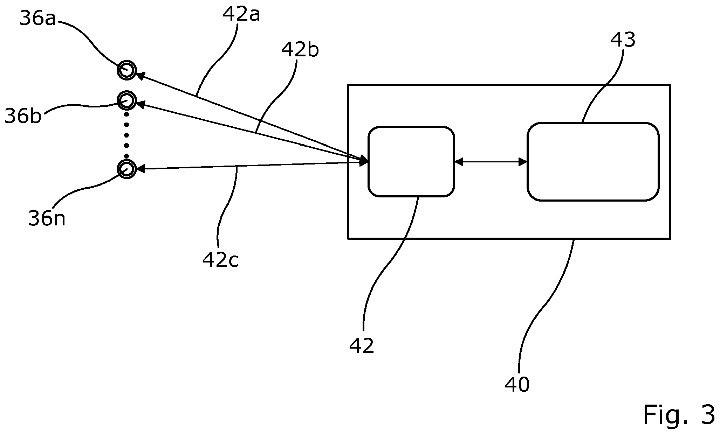

En relation avec les figures 1 et 3, on a représenté le dispositif électronique 40 qui gère l'activation en émission et en réception des transducteurs élémentaires 36a,36b,...,36n du réseau. Le dispositif électronique 40 comprend une carte d'acquisition ultrasonore 42 et une unité centrale 43.

La carte d'acquisition ultrasonore 42 comprend un circuit logique programmable et des éléments comme des convertisseurs analogique-numérique pour la transmission de signaux numériques à l'unité centrale 43, des amplificateurs ou des filtres. La carte d'acquisition ultrasonore 42 est logée dans le tube 31 de la sonde 30. La carte ultrasonore 42 est connecté à chaque transducteur élémentaire 36a,36b,...,36n du réseau via une liaison filaire 42a,42b,...,42n. Par conséquent, un transducteurs élémentaires 36a,36b,...,36n est activable, par la carte d'acquisition 42, de manière indépendante des autres. Un signal impulsionnel envoyé par la carte d'acquisition ultrasonore 42 à un transducteur élémentaire 36a,36b,...,36n, via la liaison filaire correspondante 42a,42b,...,42n entre le transducteur élémentaire 36a,36b,...,36n et la carte d'acquisition 42, est converti en impulsion ultrasonore 51 par ce dernier. Inversement, lors qu'un transducteur élémentaire 36a,36b,...,36n reçoit une impulsion ultrasonore 51, ce dernier envoie, à la carte d'acquisition 42, un signal impulsionnel correspondant à l'impulsion ultrasonore reçue via la liaison filaire correspondante 42a,42b,...,42n entre le transducteur élémentaire 36a, 36b,...,36n et la carte d'acquisition 42,

La carte d'acquisition 42 est reliée d'autre part, par liaison filaire de type USB ou non filaire de type Wifi, à l'unité centrale 43. L'unité centrale 43 comprend de manière connue au moins un processeur, des mémoires et des unités périphériques et des interfaces d'entrées-sorties. L'unité centrale 43 met en oeuvre un programme, pour d'une part, gérer l'émission et la réception d'impulsions ultrasonores par le réseau de transducteur ultrasonores 36a,36b,...,36n via la carte d'acquisition 42, et d'autre part, effectuer le traitement et l'analyse des signaux correspondants aux impulsions ultrasonores 51 reçues par la carte d'acquisition 42. Selon l'invention, le dispositif électronique 40 est commutable selon deux modes distincts : le mode couplage et le mode balayage. En mode couplage, l'unité centrale 43 détermine si la sonde 30 est bien couplée avec la face avant du panneau à analyser tandis qu'en mode balayage, l'unité centrale 43 détermine si un panneau inspecté présente ou non des délaminages. La vérification du bon couplage entre la sonde 30 et la face avant du panneau est effectuée par l'unité centrale 43 qui va déterminer, en mode couplage, si un indicateur booléen de couplage a une valeur égal à 1, comme cela sera décrit plus loin.

Dans les deux modes, la forme du signal impulsionnel envoyé à un transducteur élémentaire 36a,36b,...,36n est la même pour les autres transducteurs élémentaires.

Dans le mode de couplage, les transducteurs élémentaires 36a,36b,...,36n sont tous activés en même temps en émission ou en réception et chaque signal fourni par un transducteur élémentaire au dispositif électronique 40 est amplifié afin que les signaux fournis par les transducteurs élémentaires 36a, 36b,...,36n aient tous la même amplitude.

Selon ce mode, et comme cela sera décrit plus loin, l'unité centrale 43 commande l'affichage d'au moins un témoin lumineux présent sur le dispositif de visualisation 41 suite aux résultats de l'analyse des signaux fournis pour les transducteurs élémentaires 36a, 36b,...,36n au dispositif électronique 40,

Dans le mode balayage, les transducteurs élémentaires 36a,36b,...,36n sont activés successivement, selon une séquence d'activation, que ce soit en émission ou en réception.

En émission, les multiples tirs déphasés (retardés) entre eux permettent de créer un faisceau par interférences constructives. En effet, les multiples tirs s'additionnent à un front d'onde unique se déplaçant à un angle, dit angle de balayage, défini par rapport à la direction d'inspection M. En modifiant d'un tir à l'autre les déphasages, l'angle de balayage est modifié. Le signal fourni par l'unité centrale 43 à la carte d'acquisition 42 comprend alors, en plus de la forme du signal impulsionnel destiné à être converti en impulsion ultrasonore par les transducteurs élémentaires 36a,36b,...,36n, la séquence d'activation, et le déphasage entre les tirs. Le déphasage entre les tirs est avantageusement déterminé en fonction de la vitesse de déplacement de la roue 34 sur la face avant du panneau, obtenue via des capteurs arrangés sur la sonde 30.

En réception, une multitude d'impulsions ultrasonores déphasées entre elles par est reçue par le réseau de transducteurs élémentaires 36a,36b,...,36n. Pour chaque séquence d'activation, la carte d'acquisition 42 reconstitue un signal, dit signal de balayage, à partir des caractéristiques (amplitude, forme, phase) des différentes impulsions reçues, du temps de vol de chacune des impulsions reçues et de l'angle de balayage. Le signal de balayage comprend ainsi des données d'amplitude et de temps correspondant à des amplitudes et des temps d'arrivée des impulsions reçues.

En utilisation et comme cela sera décrit plus loin, c'est-à-dire lors de l'inspection d'un panneau, le signal de balayage représente le profil d'écho ultrasonore retourné par le panneau.

Par « temps de vol » d'une impulsion reçue, on entend le temps écoulé entre le moment de l'émission d'une impulsion ultrasonore par un transducteur élémentaire 36a,36b,...,36n et le moment de la réception par ce même transducteur élémentaire de la même impulsion ultrasonore réfléchie par une discontinuité de milieu.

La carte d'acquisition 42 numérise ensuite le signal de balayage et le transmet à l'unité centrale 43 qui effectue le traitement et l'analyse du signal de balayage comme cela sera décrit plus loin.

L'unité centrale 43 commande, suite aux résultats de l'analyse du signal de balayage, l'affichage des témoins du dispositif de visualisation 41 destiné à être lu par un opérateur utilisant l'appareil de diagnostic de l'invention.

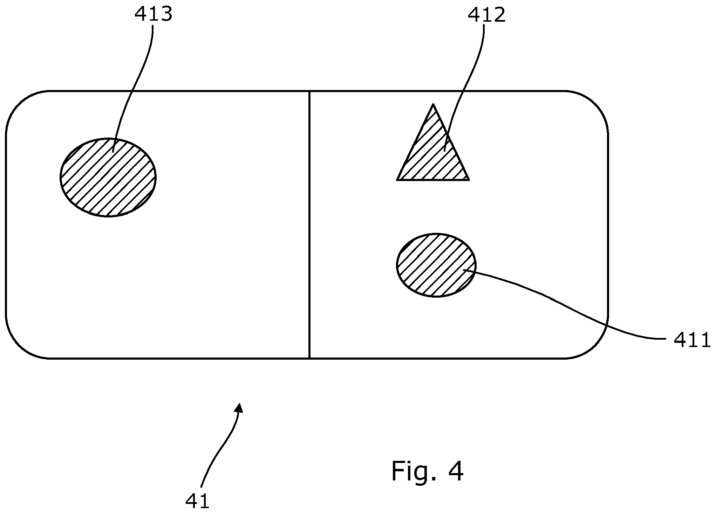

Le dispositif de visualisation 41, illustré en figure 4, comporte :
- un premier témoin 411 lumineux qui lorsque activé, indique qu'aucun délaminage au sein de panneau inspecté est détecté ;
- un deuxième indicateur 412 lumineux qui lorsque activé, indique qu'un délaminage au sein du panneau inspecté est détecté ;
- un troisième témoin 413 lumineux qui lorsque activé, indique que le couplage entre le dispositif ultrasonore et la face avant 11 de la zone du panneau à inspecter est correct.

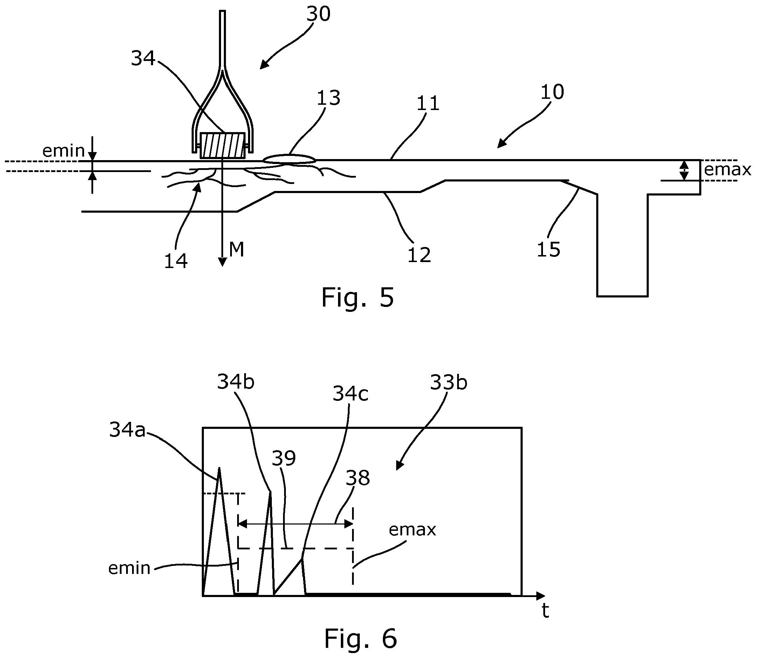

Le procédé de détection de délaminage dans un panneau, représenté à la figure 5, via l'appareil de détection selon l'invention, va être maintenant décrit.

Dans une première étape, le dispositif électronique 40 fonctionne en mode couplage afin de vérifier qu'un indicateur booléen de couplage, indicateur du couplage entre le panneau 10 à inspecter et la sonde 30, a pour valeur 1.

Lors de cette première étape, et lorsque la sonde 30 est dans le vide, l'unité centrale 43 mesure, pour chaque transducteur élémentaire 36a, 36b,...,36n, le temps de vol, dit temps de vol à vide, de la première impulsion reçue. La première impulsion qui est reçue correspond à une impulsion ultrasonore réfléchie par la membrane de la roue 34 lorsque cette dernière n'est pas en contact avec le panneau à inspecter. L'unité centrale 43 analyse également la forme, dite forme de référence, du signal correspondant à la première impulsion reçue.

Lorsque la sonde est en position d'utilisation, comme représenté à la figure 5, l'unité centrale 43 mesure pour chaque tir, le temps de vol, dit temps de vol de couplage, de la première impulsion reçue. La première impulsion qui est reçue correspond cette fois à une impulsion ultrasonore réfléchie par la membrane du pneu de la roue 34 lorsque cette dernière est en contact avec la face avant 11 du panneau 10 à inspecter. L'unité centrale 43 soustrait ensuite la valeur du temps de vol de couplage à la valeur du temps de vol à vide. Si le résultat de la soustraction est inférieur à un seuil paramétrable, un premier indicateur booléen de couplage du transducteur élémentaire est mis à la valeur un (en logique positive).

Enfin, un premier indicateur global de couplage est mis à la valeur un si le nombre de premiers indicateurs mis à un est supérieur à un seuil paramétrable.

Le premier indicateur global de couplage mis à la valeur un représente une bonne utilisation de la sonde 30, et donc une bonne déformation de la roue 34 suite à son appuie sur la face avant 11 du panneau 10.

Ensuite, et pour chaque transducteur élémentaire 36a,36b,...,36n, l'unité centrale 43 mesure le taux de déformation de la forme du signal de l'impulsion réfléchie par la face avant 11 du panneau 10 après un tir avec la forme du signal de référence. La déformation est due à la différence d'impédance entre les milieux (caoutchouc/ matériau composite) traversés par l'impulsion. Lorsque le signal de référence est du type pulse gaussien, l'unité centrale 43 utilise par exemple deux portes d'acquisition numériques pour détecter la position des alternances positives et négatives du signal de l'impulsion réfléchie par la face avant du panneau par rapport à celles du pulse gaussien.

Si le taux de déformation est supérieur à un taux de déformation prédéterminé, un second indicateur booléen de couplage du transducteur élémentaire est mis à un, en logique positive.

Enfin, un second indicateur global de couplage est mis à un si le nombre de seconds indicateurs mis à un est supérieur à un seuil paramétrable. Le second indicateur global de couplage mis à un indique qu'une couche franche de couplant est présente entre la membrane de la roue 34 et le panneau 10.

L'unité centrale 43 effectue ensuite un ET logique entre le premier indicateur global de couplage et le second indicateur global de couplage. Le résultat booléen du ET logique est appelé indicateur de couplage. Dans le mode couplage, l'unité centrale 43 compare en permanence la valeur de l'indicateur de couplage avec la valeur 1. Si l'indicateur de couplage a une valeur égale à 1, l'unité centrale 43 détermine que la sonde 30 est couplée avec la face avant 11 et commande le dispositif indicateur 41 pour activer le troisième témoin 413.

Une fois la sonde 30 couplée, c'est-à-dire que l'indicateur de couplage a une valeur égale à 1, et dans une seconde étape, le dispositif électronique 30 commute automatiquement en mode balayage et le balayage du panneau 10 débute pour une première séquence d'activation. Comme décrit plus haut, la carte d'acquisition 42 reconstitue le signal de balayage 33b, représenté à la figure 6, à partir des impulsions reçues. Le signal de balayage 33b représente le profil d'écho ultrasonore du panneau 10.

Les impulsions ultrasonores émises par les transducteurs élémentaires 36a,36b,...,36n lors d'une séquence d'activation traversent l'épaisseur du panneau 10 et se réfléchissent sur des éléments tels que les surfaces du panneau 10, les arêtes 15, et autres discontinuités, comme des délaminages 14.

Ces réflexions se traduisent par des pics 34a,34b,34c dans le signal de balayage 33b. Le signal de balayage 33b comprend ainsi typiquement une pluralité de pics 34a,34b,34c décalés dans le temps, chaque pic correspondant à au moins une impulsion réfléchie par un élément du panneau 10. L'abscisse temporelle t du signal de balayage 33b représente les temps de vol parcourus par les impulsions reçues. Par conséquent, le décalage temporel entre les pics 34a,34b,34c est fonction du temps de vol des impulsions reçues qui ont été réfléchies par les éléments 11,14,15 du panneau.

A partir de la célérité des ondes ultrasonores, ce décalage temporel permet donc de déterminer la distance entre les éléments 11,14,15 du panneau 10 et la profondeur des éléments dans l'épaisseur du panneau 10. Un pic 34a,34b,34c correspondant à un élément 11,14,15 du panneau 10 a une amplitude d'autant plus importante que le nombre d'impulsions réfléchis par cet élément 11,14,15 lors d'une séquence d'activation, est important.

Afin de détecter la présence de délaminage, l'unité centrale 43 détermine si des pics 34b,34c présents dans le signal de balayage ont une amplitude qui dépasse un seuil prédéterminé 39 et sont compris dans une porte temporelle prédéfinie 38. Le seuil d'amplitude prédéterminé permet de ne prendre en compte que les pics 34b,34c qui révèlent la présence d'un délaminage et non d'un bruit parasite.

Dans la figure 6, l'appareil de diagnostic 20 inspecte le panneau représenté à la figure 5, qui a subi un impact 13 sur sa face avant 11 ayant donné lieu à des délaminages 14. Le dispositif ultrasonore 30 est représenté appuyé contre la face avant 11 du panneau, à proximité immédiate de l'impact 13.

La porte temporelle 38 est représentative d'une plage de profondeur dans l'épaisseur du panneau, variant entre une épaisseur minimale eₘᵢₙ et une épaisseur maximale eₘₐₓ, considérées à partir de la face avant 11 du panneau, et selon la direction transversale du panneau. La profondeur eₘᵢₙ correspond à une épaisseur strictement supérieure à celle d'un temps de vol d'une impulsion reçue correspondant à l'impulsion réfléchie 34a, par la face avant 11, et qui ne serait pas représentative d'un délaminage 14. La profondeur eₘₐₓ correspond à une profondeur strictement inférieure à celle d'un temps de vol d'une impulsion reçue qui serait réfléchie par un élément situé à une distance eₘₐₓ de la face avant. Selon l'invention, la profondeur eₘₐₓ est choisie de sorte qu'elle soit inférieur à la moitié de l'épaisseur connue des panneaux 10 en composite stratifiées utilisés pour réaliser la structure de l'aéronef.

Pour la séquence d'activation du réseau de transducteurs élémentaires 36a,36b,...,36n en cours, un pic 34b ayant une amplitude dépassant le seuil d'amplitude 39 est présent dans la porte temporelle 38. Le pic 34 est donc significatif d'un délaminage 14 présent dans l'épaisseur du panneau 10. L'unité centrale 43 commande alors le dispositif de visualisation 41 pour activer le second témoin 412.

Si aucun pic ayant une amplitude dépassant le seuil d'amplitude 39 et dans la porte temporelle 38 n'avait été détecté, l'unité centrale 43 aurait commandé le dispositif de visualisation pour activer le premier témoin 411.

Il est à noter que lors de l'utilisation de l'appareil de diagnostic 1, le dispositif électronique bascule, à intervalles temporaires réguliers, en mode couplage afin de vérifier le bon couplage entre la sonde 30 et le panneau 10 à inspecter. Si le couplage est bon, alors, le dispositif électronique commute automatiquement en mode balayage comme décrit ci-dessus.

On comprend à la lecture de la description ci-dessus que l'appareil de diagnostic 1 selon l'invention pour la détection d'un délaminage 14 dans l'épaisseur d'un panneau 10 en composite stratifié permet une inspection d'un panneau 10 ayant une épaisseur non constante selon sa longueur.

Le signal réfléchit par la face arrière 12 d'un panneau 10 inspecté par l'appareil de diagnostic 1 selon l'invention, lorsque la sonde 30 de ce dernier est placée sur la face avant 11 du panneau, n'est donc pas utilisé pour la prise de décision quant à la présence ou non d'un délaminage. En effet, une analyse du signal de balayage sur une plage de profondeur restreinte du panneau 10 est suffisante puisque un délaminage causé par un impact 13 reçu sur la face avant 11 d'un panneau en matériau composite stratifié commence typiquement au niveau des premières interfaces des couches de l'empilement, au niveau de la face avant du panneau et se propage dans les interfaces de couches suivantes, suivant un modèle d'expansion de forme conique, vers la face arrière 12 du panneau.

L'utilisation de l'appareil de diagnostic selon l'invention nécessite uniquement de s'assurer du bon couplage entre la sonde 30 et le panneau 10 à inspecter de sorte à s'assurer notamment que la plage de profondeur (fenêtre temporelle 38) analysée est constante qu'importe l'épaisseur du panneau. Ainsi, contrairement aux dispositifs de l'art antérieur, l'appareil de diagnostic 1 selon l'invention ne nécessite pas d'être calibré pour des épaisseurs constantes de panneaux.

On notera en outre que l'appareil de diagnostic 1 de l'invention a un fonctionnement simple et offre une lecture des résultats intuitive. Ainsi, il est facilement utilisable par un opérateur non hautement qualifié dans les technologies de contrôle non destructif. Ainsi, un personnel au sol dans un aéroport, quel qu'il soit, muni de cet appareil de diagnostic, peut l'appréhender rapidement et l'utiliser pour déterminer si l'impact visible sur la structure d'aéronef inspectée a causé ou non des dommages structurels, comme des délaminages, et si des spécialistes de l'inspection doivent être sollicités. L'immobilisation des aéronefs au sol n'est préconisée que si nécessaire.

Bien que le dispositif de visualisation ait été décrit avec des témoins lumineux, ces derniers sont sonores dans une variante du dispositif de visualisation. Dans une autre variante du dispositif de visualisation, les témoins sont sonores et lumineux.

## Revendications

1. Appareil de diagnostic (1) pour la détection d'un délaminage (14) dans l'épaisseur d'un panneau en composite stratifié (10) ayant une épaisseur non constante selon sa longueur, ledit appareil comprenant une sonde ultrasonore (30), comprenant une roue libre (34) destinée à être mise au contact d'une face (11) dudit panneau et apte à être déplacée sur la longueur de ladite face, la roue enfermant un liquide neutre (35) vis-à-vis des ondes ultrasonores et une pluralité de transducteurs élémentaires (36a,36b, ...,36n), ledit appareil comprenant un dispositif électronique (40) connecté à chacun desdits transducteurs pour commander l'émission et la réception d'impulsions ultrasonores (51) par ladite sonde (30) via l'activation d'au moins un transducteur élémentaire (36a,36b, ...,36n), l'appareil (1) comprenant en outre un dispositif de visualisation (41) muni d'au moins un premier témoin activable par le dispositif électronique (40) lorsque ce dernier détecte la présence d'un délaminage dans le panneau, **caractérisé en ce que** ledit dispositif électronique (40) est configuré pour calculer, dans un mode de couplage mis en oeuvre à intervalles temporels réguliers, la valeur d'un indicateur de couplage de ladite sonde (30) avec ladite face (11), et pour commuter, lorsque la valeur de l'indicateur de couplage est égale a une valeur prédéterminée, du mode de couplage à un mode de balayage, la valeur de l'indicateur de couplage étant liée à la déformation de la roue appuyée sur ladite face (11) , le mode de balayage étant tel qu'en émission, le dispositif électronique (40) transmet successivement un même signal impulsionnel aux transducteurs élémentaires (40) suivant une séquence d'activation des transducteurs élémentaires prédéfinie et, tel qu'en réception, le dispositif électronique (40) analyse les signaux reçus par les transducteurs élémentaires de sorte à détecter un délaminage (14) dans une plage de profondeur prédéterminée de l'épaisseur dudit panneau (10), ladite plage variant entre une profondeur minimale et une profondeur maximale, la profondeur maximale étant inférieure à la moitié de l'épaisseur connue dudit panneau.

2. Appareil de diagnostic (1) selon la revendication 1, **caractérisé en ce que** dans le mode de couplage, en émission, le dispositif électronique (40) transmet simultanément un même signal impulsionnel à chacun des transducteurs élémentaires (36a,36b,...,36n), et, en réception, le dispositif électronique (40) analyse les signaux reçus par les transducteurs élémentaires de sorte à calculer la valeur de l'indicateur de couplage.

3. Appareil de diagnostic (20) selon la revendication 1 ou la revendication 2, **caractérisé en ce que** le dispositif de visualisation (41) comprend en outre un second témoin (413) activable par le dispositif électronique (40) lorsque ce dernier est commuté en mode balayage.

4. Procédé pour la détection d'un délaminage (14) dans l'épaisseur d'un panneau en composite stratifié (10) ayant une épaisseur non constante selon sa longueur, ledit panneau (10) présentant une première face, dite face avant (11), ledit procédé étant mis en oeuvre via l'appareil de diagnostic selon l'une quelconque des revendications précédentes, **caractérisé en ce que** le procédé comporte les étapes successives suivantes :
a) Comparaison d'une valeur de l'indicateur de couplage avec une valeur prédéterminée;
b) pour une séquence d'activation des transducteurs élémentaires et si la valeur de l'indicateur de couplage est égale à ladite une valeur prédéterminée:
1) émission par chacun de la pluralité de transducteurs élémentaires (36a,36b, ...,36n) d'une impulsion ultrasonore (51) vers le panneau (10)
2) réception par chacun des transducteurs élémentaire (36a,36b, ...,36n) d'une impulsion réfléchie par le panneau (10)
3) reconstitution, par le dispositif électronique (40), d'un signal de balayage (33b) à partir de la pluralité d'impulsions réfléchies reçues,
c) activation du premier témoin du moyen de présentation de l'information (41) indicateur de la présence d'un délaminage (14) dans l'épaisseur dudit panneau (10) lorsque le signal de balayage (33b) comporte un pic (34b) ayant une amplitude supérieure à un seuil prédéfini (39) et représentant un temps de vol d'une impulsion reçue d'une durée :
- strictement supérieure à celle d'un temps de vol d'une impulsion reçue correspondant à l'impulsion réfléchie par ladite face avant (11), et ;
- strictement inférieure à celle d'un temps de vol d'une impulsion reçue qui correspondrait à l'impulsion réfléchie par un élément situé à une distance eₘₐₓ de ladite face avant (11).

5. Procédé selon la revendication 4, **caractérisé en ce que** la valeur de l'indicateur de couplage est égale à la valeur prédéterminée lorsque :
- A) le résultat de la soustraction entre le temps de vol d'une première impulsion reçue par un transducteur élémentaire lorsque la sonde (30) est au contact de la face avant (11) du panneau et le temps de vol d'une première impulsion reçue par ce même transducteur élémentaire lorsque la sonde (30) n'est pas au contact de ladite face avant (11), est inférieur à un seuil prédéterminé,
- B) le taux de déformation d'un signal réfléchi par ladite face avant (11) et reçu par ce même transducteur élémentaire lorsque la sonde est au contact de ladite face avant (11) est supérieur à un taux de déformation prédéterminé ; et
- C) les occurrences A et B sont valides pour un nombre de transducteurs élémentaires supérieur à un nombre prédéterminé.

6. Procédé selon la revendication 4 ou 5, **caractérisé en ce que** la distance eₘₐₓ est inférieure à la moitié de l'épaisseur connue du panneau (10).

7. Procédé selon l'une quelconque des revendications 4 à 6, **caractérisé en ce que** la vérification du bon couplage est vérifiée à intervalles temporels réguliers.

## Patentansprüche

1. Diagnosegerät (1) zur Erfassung einer Delaminierung (14) in der Dicke einer Platte aus laminiertem Verbundwerkstoff (10), die eine entlang ihrer Länge nicht konstante Dicke hat, wobei das Gerät eine Ultraschallsonde (30) enthält, die ein Freilaufrad (34) enthält, das dazu bestimmt ist, mit einer Seite (11) der Platte in Kontakt gebracht zu werden und über die Länge der Seite verschoben werden kann, wobei das Rad eine gegenüber den Ultraschallwellen neutrale Flüssigkeit (35) und eine Vielzahl von Elementarwandlern (36a, 36b, ..., 36n) umschließt, wobei das Gerät eine elektronische Vorrichtung (40) enthält, die mit jedem der Wandler verbunden ist, um das Senden und Empfangen von Ultraschallimpulsen (51) durch die Sonde (30) über die Aktivierung mindestens eines Elementarwandlers (36a, 36b, ..., 36n) zu steuern, wobei das Gerät (1) außerdem eine Anzeigevorrichtung (41) enthält, die mit mindestens einer ersten Kontrollleuchte versehen ist, die von der elektronischen Vorrichtung (40) aktiviert werden kann, wenn letztere das Vorhandensein einer Delaminierung in der Platte erfasst, **dadurch gekennzeichnet, dass** die elektronische Vorrichtung (40) konfiguriert ist, in einem Kopplungsmodus, der in regelmäßigen zeitlichen Abständen durchgeführt wird, den Wert eines Kopplungsindikators der Sonde (30) mit der Seite (11) zu berechnen, und, wenn der Wert des Kopplungsindikators gleich einem vorbestimmten Wert ist, vom Kopplungsmodus in einen Abtastmodus umzuschalten, wobei der Wert des Kopplungsindikators mit der Verformung des auf die Seite (11) gedrückten Rads verbunden ist, wobei der Abtastmodus derart, das beim Senden die elektronische Vorrichtung (40) nacheinander ein gleiches Impulssignal an die Elementarwandler (40) gemäß einer vordefinierten Aktivierungsfolge der Elementarwandler sendet, und derart ist, dass beim Empfang die elektronische Vorrichtung (40) die von den Elementarwandlern empfangenen Signale analysiert, um eine Delaminierung (14) in einem vorbestimmten Tiefenbereich der Dicke der Platte (10) zu erfassen, wobei der Bereich zwischen einer minimalen Tiefe und einer maximalen Tiefe variiert, wobei die maximale Tiefe geringer als die Hälfte der Dicke der Platte ist.

2. Diagnosegerät (1) nach Anspruch 1, **dadurch gekennzeichnet, dass** die elektronische Vorrichtung (40) im Kopplungsmodus beim Senden gleichzeitig ein gleiches Impulssignal an jeden der Elementarwandler (36a, 36b, ..., 36n) überträgt, und die elektronische Vorrichtung (40) beim Empfang die von den Elementarwandlern empfangenen Signale analysiert, um den Wert des Kopplungsindikators zu berechnen.

3. Diagnosegerät (20) nach Anspruch 1 oder Anspruch 2, **dadurch gekennzeichnet, dass** die Anzeigevorrichtung (41) außerdem eine zweite Kontrollleuchte (413) enthält, die von der elektronischen Vorrichtung (40) aktiviert werden kann, wenn letztere in den Abtastmodus umgeschaltet wird.

4. Verfahren zur Erfassung einer Delaminierung (14) in der Dicke einer Platte aus laminiertem Verbundwerkstoff (10) mit einer gemäß ihrer Länge nicht konstanten Dicke, wobei die Platte (10) einer erste Seite, Vorderseite (11) genannt, aufweist, wobei das Verfahren mittels des Diagnosegeräts nach einem der vorhergehenden Ansprüche durchgeführt wird, **dadurch gekennzeichnet, dass** das Verfahren die folgenden aufeinanderfolgenden Schritte aufweist:
a) Vergleich eines Werts des Kopplungsindikators mit einem vorbestimmten Wert;
b) für eine Aktivierungsfolge der Elementarwandler und wenn der Wert des Kopplungsindikators gleich dem vorbestimmten Wert ist:
1)Senden durch jeden der Vielzahl von Elementarwandlern (36a, 36b, ..., 36n) eines Ultraschallimpulses (51) zur Platte (10).
2)Empfang durch jeden der Elementarwandler (36a, 36b, ..., 36n) eines von der Platte (10) reflektierten Impulses,
3) Wiederherstellung, durch die elektronische Vorrichtung (40), eines Abtastsignals (33b) ausgehend von der Vielzahl von empfangenen reflektierten Impulsen,
c) Aktivierung der ersten Kontrollleuchte der Einrichtung zur Darstellung der Information (41), die das Vorhandensein einer Delaminierung (14) in der Dicke der Platte (10) anzeigt, wenn das Abtastsignal (33b) eine Spitze (34b) aufweist, die eine Amplitude höher als eine vordefinierte Schwelle (39) hat und eine Laufzeit eines empfangenen Impulses einer Dauer darstellt:
- strikt länger als diejenige einer Laufzeit eines empfangenen Impulses entsprechend dem von der Vorderseite (11) reflektierten Impuls, und
- strikt kürzer als diejenige einer Laufzeit eines empfangenen Impulses, der dem von einem Element reflektierten Impuls entsprechen würde, das sich in einem Abstand eₘₐₓ von der Vorderseite (11) befindet.

5. Verfahren nach Anspruch 4, **dadurch gekennzeichnet, dass** der Wert des Kopplungsindikators gleich dem vorbestimmten Wert ist, wenn:
A) das Ergebnis der Subtraktion zwischen der Laufzeit eines ersten von einem Elementarwandler empfangenen Impulses, wenn die Sonde (30) mit der Vorderseite (11) der Platte in Kontakt ist, und der Laufzeit eines ersten von diesem gleichen Elementarwandler empfangenen Impulses, wenn die Sonde (30) nicht mit der Vorderseite (11) in Kontakt ist, unter einer vorbestimmten Schwelle liegt,
B) der Verformungsgrad eines von der Vorderseite (11) reflektierten und von diesem gleichen Elementarwandler empfangenen Signals, wenn die Sonde mit der Vorderseite (11) in Kontakt ist, größer als ein vorbestimmter Verformungsgrad ist; und
C) die Vorkommen A und B für eine Anzahl von Elementarwandlern größer als eine vorbestimmte Anzahl gültig sind.

6. Verfahren nach Anspruch 4 oder 5, **dadurch gekennzeichnet, dass** der Abstand eₘₐₓ kleiner als die Hälfte der bekannten Dicke der Platte (10) ist.

7. Verfahren nach einem der Ansprüche 4 bis 6, **dadurch gekennzeichnet, dass** die Überprüfung der korrekten Kopplung in regelmäßigen Zeitabständen überprüft wird.

## Claims

1. Diagnostic apparatus (1) for detecting delamination (14) in the thickness of a laminated composite panel (10) having a non-constant thickness along its length, said apparatus comprising an ultrasonic probe (30), comprising a free-running wheel (34) intended to be brought into contact with a face (11) of said panel and adapted to be moved over the length of said face, the wheel enclosing a liquid (35) which is neutral to ultrasonic waves and a plurality of elementary transducers (36a, 36b,..., 36n), said device comprising an electronic device (40) connected to each of said transducers to control the emission and reception of ultrasonic pulses (51) by said probe (30) by the activation of at least one elementary transducer (36a, 36b,..., 36n), the apparatus (1) further comprising a display device (41) having at least a first indicator which can be activated by the electronic device (40) when the latter detects the presence of delamination in the panel, **characterized in that** said electronic device (40) is configured to calculate, in a coupling mode implemented at regular time intervals, the value of an indicator of the coupling of said probe (30) with said face (11), and to switch, if the value of the coupling indicator is equal to a predetermined value, from the coupling mode to a scanning mode, the value of the coupling indicator being linked to the deformation of the wheel applied to said face (11), the scanning mode being such that, during emission, the electronic device (40) transmits the same pulsed signal successively to the elementary transducers (40) according to a predetermined activation sequence for the elementary transducers, and such that, during reception, the electronic device (40) analyzes the signals received by the elementary transducers so as to detect delamination (14) in a predetermined depth range of the thickness of said panel (10), said range varying between a minimum depth and a maximum depth, the maximum depth being less than half the known thickness of said panel.

2. Diagnostic apparatus (1) according to Claim 1, **characterized in that**, in the coupling mode, during transmission, the electronic device (40) transmits the same pulse signal simultaneously to each of the elementary transducers (36a, 36b, ..., 36n), and, during reception, the electronic device (40) analyzes the signals received by the elementary transducers in order to calculate the value of the coupling indicator.

3. Diagnostic apparatus (20) according to Claim 1 or Claim 2, **characterized in that** the display device (41) further comprises a second indicator (413) that can be activated by the electronic device (40) when this device is switched to scanning mode.

4. Method for detecting delamination (14) in the thickness of a panel of laminated composite (10) having a non-constant thickness along its length, said panel (10) having a first face, called the front face (11), said method being implemented by means of the diagnostic apparatus according to any one of the preceding claims, **characterized in that** the method includes the following successive steps:
a) comparison of a value of the coupling indicator with a predetermined value;
b) for an activation sequence of the elementary transducers, and if the value of the coupling indicator is equal to said predetermined value:
1) emission of an ultrasonic pulse (51) by each of the plurality of elementary transducers (36a, 36b, ..., 36n) toward the panel (10);
2) reception by each of the elementary transducers (36a, 36b, ..., 36n) of a pulse reflected by the panel (10);
3) reconstitution, by the electronic device (40) of a scanning signal (33b), based on the plurality of reflected pulses received;
c) activation of the first indicator of the means of presenting the information (41) indicative of the presence of delamination (14) in the thickness of said panel (10) when the scanning signal (33b) has a peak (34b) having an amplitude above a predefined threshold (39), representing a time of flight of a received pulse whose duration is:
- strictly greater than that of a time of flight of a received pulse corresponding to the pulse reflected by said front face (11), and
- strictly less than that of a time of flight of a received pulse which would correspond to the pulse reflected by an element located at a distance eₘₐₓ from said front face (11).

5. Method according to Claim 4, **characterized in that** the value of the coupling indicator is equal to the predetermined value when:
- A) the result of the subtraction between the time of flight of a first pulse received by an elementary transducer when the probe (30) is in contact with the front face (11) of the panel and the time of flight of a first pulse received by the same elementary transducer when the probe (30) is not in contact with said front face (11) is below a predetermined threshold,
- B) the rate of deformation of a signal reflected by said front face (11) and received by the same elementary transducer when the probe is in contact with said front face (11) is greater than a predetermined rate of deformation; and
- C) occurrences A and B are valid for a number of elementary transducers greater than a predetermined number.

6. Method according to Claim 4 or 5, **characterized in that** the distance emax is less than half of the known thickness of the panel (10).

7. Method according to any of Claims 4 to 6, **characterized in that** the check of the correctness of coupling is performed at regular time intervals.
